# EUROPEAN PATENT SPECIFICATION

(11) **EP 3 438 462 B1**
(45) Date of publication and mention of the grant of the patent: **29.04.2020**
(21) Application number: 17775264.9
(22) Date of filing: 29.03.2017
(51) Int. Cl.: F04D 29/30, B24C 1/08, B24C 3/32, F04D 29/02, F04D 29/28, F04D 29/62

(54) **IMPELLER PRODUCTION METHOD BY FUSED DEPOSITION MODELING AND MECHANICAL POLISHING**
VERFAHREN ZUR HERSTELLUNG EINES LAUFRADS DURCH SCHMELZABLAGERUNGSMODELLIERUNG UND MECHANISCHES POLIEREN
PROCÉDÉ DE PRODUCTION DE TURBINE PAR DÉPÔT DE FIL EN FUSION ET POLISSAGE MÉCANIQUE

(30) Priority: 29.03.2016 JP 2016065616
(43) Date of publication of application: 06.02.2019
(73) Proprietor: Mitsubishi Heavy Industries Compressor Corporation, Minato-ku Tokyo 108-0014 (JP)
(72) Inventor: KAWASUMI, Sosuke, Tokyo 108-8215 (JP); KONNO, Yuya, Tokyo 108-8215 (JP); NAKANIWA, Akihiro, Tokyo 108-8215 (JP)
(74) Representative: Studio Torta S.p.A.
(86) International application number: PCT/JP2017/012989
(87) International publication number: WO 2017/170730

(56) References cited:
- DE-A1-102014 012 480
- JP-A- 2002 529 263
- JP-A- 2013 104 321
- JP-A- 2014 009 733
- JP-A- 2014 009 733
- JP-A- 2014 094 433
- JP-A- 2014 094 433
- JP-A- 2015 510 979

## Description

### Technical Field

The present invention relates to a method for producing an impeller.

### Background Art

A centrifugal rotating machine such as a centrifugal compressor, a centrifugal blower, or a centrifugal pump uses an impeller (a bladed wheel) including a hub, a shroud, and a plurality of blades.

The impeller has a channel surrounded by the hub, the shroud, and adjacent blades. The channel is designed to have a three-dimensionally curved complex shape in view of compression efficiency and the like. The impeller is generally required to have high shape accuracy and very low surface roughness.

In a method for producing an impeller, a plurality of separately fabricated pieces are conventionally welded. However, because of difficulty in ensuring welding quality, recently, an impeller is often integrally formed from a mass of metal material by electrical discharge machining. In the electrical discharge machining, a channel is engraved using an electrode having a shape matching a shape of the channel. When the electrical discharge machining is performed, an affected layer formed on a surface must be removed, for example, by pickling.

The impeller that converts flow rate energy of a fluid into pressure energy is required to have high smoothness of a wall surface of the channel to reduce friction loss and achieve predetermined compression efficiency. Very low surface roughness is required for the wall surface of the channel.

Thus, there is a need for a polishing step of finishing the wall surface of the channel of the formed impeller to reach a required value of surface roughness (Patent Literatures 1 and 2).

### Citation List

### Patent Literature

Patent Literature 1: JP 2013-170499 A
Patent Literature 2: JP 2014-094433 A
Patent Literature 3: JP 2015-510979 W
Patent Literature 4: DE 10 2014 012480
Patent Literature 5: JP 2014 09 44 33
Patent Literature 6: JP 2014 009733
Patent Literature 7: JP 2013 104321

### Summary of Invention

### Technical Problem

Although the surface of the impeller formed by the electrical discharge machining or the like can be polished to reach a required value of surface roughness by wet polishing or mechanical polishing, the polishing step takes time.

Thus, an object of the present invention is to improve efficiency of production including for forming and polishing of an impeller.

### Solution to Problem

Various requests for an impeller have been made and increasing according to specifications of centrifugal rotating machines to which the impeller is applied.

Of course, cost reduction is also desired. Electrical discharge machining of the impeller requires an electrode having a shape matching a shape of a channel, and the electrode for the electrical discharge machining increases cost.

Under such circumstances, the present inventors focused on fused deposition modeling using metal powder. The fused deposition modeling is a technology of stacking layers of melted and solidified metal powder based on cross-section data to form a three-dimensional member without a mold. Since a mold is not used, shape changes or the like can be easily addressed, and cost can be reduced.

Currently, integrally forming an impeller by deposition modeling using an electron beam as a heat source has been proposed (Patent Literature 3).

Surface roughness of a wall of a channel of an impeller formed by the fused deposition modeling is not worse than surface roughness (for example, surface roughness Ra of about 25 µm) of a wall of a channel of an impeller formed by casting or electrical discharge machining.

A method for producing an impeller according to the present invention is defined by claim 1.

"Fused deposition modeling" herein refers to successively stacking layers to form a three-dimensional member, each of the layers being formed by melting and then solidifying powder supplied to a predetermined target surface, based on cross-section data that constitutes three-dimensional data.

In the method for producing an impeller of the above aspect of the present invention, the wall of the channel is preferably polished to reach surface roughness Ra of 0.2 µm or less in the polishing step.

In the method for producing an impeller of the above aspect of the present invention, surface roughness Ra of a not yet polished wall of the impeller formed in the forming step is preferably in a range of 25 µm to 40 µm.

"Surface roughness Ra" in the present invention refers to surface roughness based on JIS B 0601-2001.

"25 µm to 40 µm" refers to 25 µm or more and 40 µm or less. For general numerical values in the present invention, "A to B" refers to A or more and B or less.

In the method for producing an impeller of the above aspect of the present invention, the impeller is preferably formed by successively stacking layers in the forming step, each of the layers being formed through melting and solidification of a use material and having a thickness of 100 µm to 1000 µm.

In case polishing by spraying is applied, which is not part of the present invention, in the polishing step it is preferable that, in a state that a nozzle member to which the particulate polishing materials are supplied from a supply source of the particulate polishing materials has been inserted into the channel, the particulate polishing materials are sprayed toward the wall from a plurality of holes formed in the nozzle member.

Further, the particulate polishing materials are preferably sprayed toward the wall from the holes while the nozzle member is being moved in the channel.

In the method for producing an impeller wherein polishing is done by spraying, which is not part of the present invention, elastic polishing materials are preferably used as the particulate polishing materials, each of the elastic polishing materials including a core material having elasticity and adhesion and abrasive grains covering the core material.

In the method for producing an impeller according to the present invention, in the polishing step, it is mandatory that by rotating the impeller disposed in a polishing material pool that pools the particulate polishing materials in an opposite direction of a rotating direction in use, the particulate polishing materials having entered the channel from an outlet of the channel rubs the wall while being forced to flow toward an inlet of the channel due to self-weight.

### Advantageous Effects of Invention

According to the present invention, even if the channel of the impeller has a complicated shape, the wall of the channel is rubbed with the particulate polishing materials, thereby allowing polishing and smoothing of the entire wall of the channel including an innermost part of the channel.

Based on surface roughness of the wall formed by the fused deposition modeling, the polishing step of rubbing with the particulate polishing materials can easily bring the surface roughness to a value or less required for the wall of the channel of the impeller.

Thus, according to the present invention including the forming step of forming the impeller by fused deposition modeling and the polishing step of polishing the wall of the channel of the impeller using the particulate polishing materials, it is possible to improve efficiency of the entire production including forming of the impeller and polishing of the wall to reach a predetermined surface roughness, as compared to a case where a wall of a channel of an impeller formed by methods other than fused deposition modeling is polished. Brief Description of Drawings

FIG. 1 is a plan view of an impeller according to a first embodiment.
FIG. 2 shows the impeller viewed from the arrow direction of the II-II line in FIG. 1.
FIG. 3 shows a deposition modeling device used for producing the impeller in FIG. 1.
FIG. 4A shows an outline configuration of a device used for polishing a wall surface of a channel in the first embodiment, and especially shows a configuration of the device when a first nozzle member is used.
FIG. 4B shows another outline configuration of the device used for polishing the wall surface of the channel in the first embodiment, and especially shows a configuration of the device when a second nozzle member is used.
   The method shown in figures 4A and 4B is not covered by the claims and is not part of the invention.
FIG. 5 is a plan view of the first and second nozzle members used for polishing in the first embodiment, together with the channel of the impeller.
FIG. 6 is a schematic diagram showing a state that the wall surface of the channel is polished with polishing materials.
FIG. 7 shows a procedure for producing the impeller according to the first embodiment.
FIG. 8A is a schematic diagram of a variant of the polishing material.
FIG. 8B is a schematic diagram for explaining an action of the polishing materials.
FIG. 9 is a schematic diagram of a channel polishing device according to a second embodiment covered by independent claim 1.

### Description of Embodiments

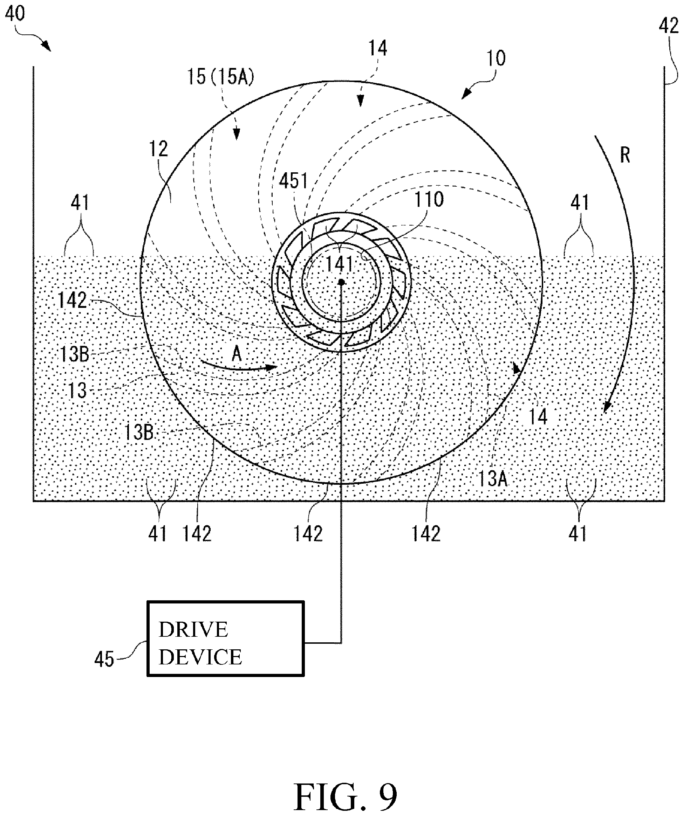

Now, with reference to the accompanying drawings, embodiments will be described. The second embodiment, corresponding to fig. 9, is an embodiment of the invention.

### [First embodiment]

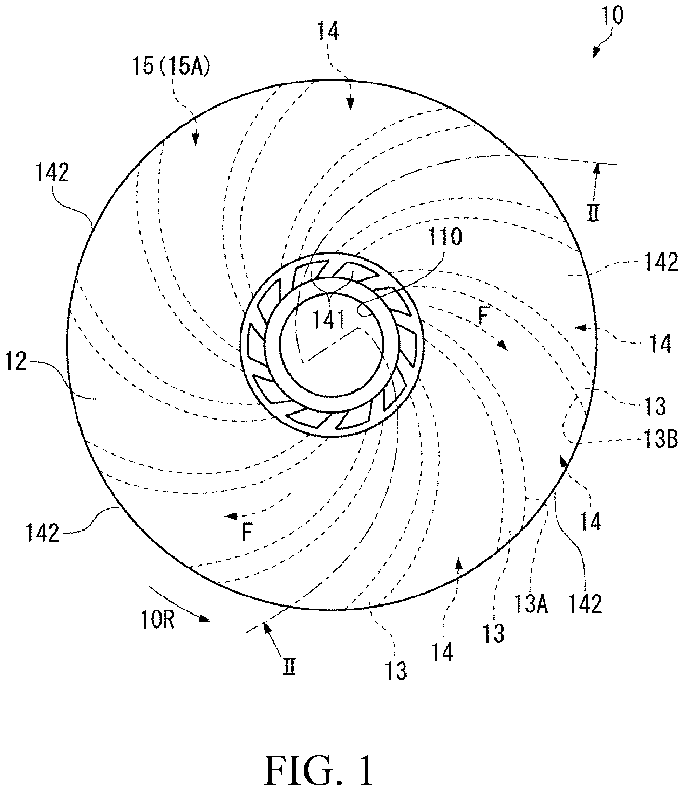

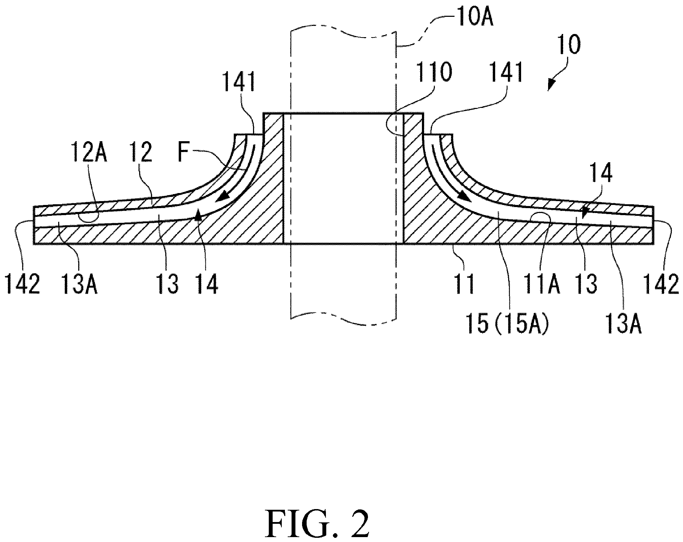

First, with reference to FIGS. 1 and 2, a basic configuration of an impeller 10 will be briefly described.

The impeller 10 is provided in a centrifugal rotating machine such as a centrifugal compressor and assembled to a rotating shaft 10A (FIG. 2).

The centrifugal compressor typically includes a plurality of impellers 10 coaxially arranged, and the impellers 10 successively compress a gas such as air.

As shown in FIGS. 1 and 2, the impeller 10 includes a hub 11 having a shaft hole 110 through which the rotating shaft 10A is passed, a shroud 12 facing a surface of the hub 11 with a predetermined space from the surface, and a plurality of blades 13. The space between the hub 11 and the shroud 12 is partitioned by the plurality of blades 13 to form a plurality of channels 14 (FIG. 1).

Each channel 14 is defined between the hub 11, the shroud 12, and adjacent blades 13, 13. A wall 15 that defines the channel 14 and with which a gas comes into contact is constituted by the hub 11, the shroud 12, and the blades 13.

As shown in FIG. 2, each channel 14 includes an inlet 141 located on an inner peripheral side of the impeller 10, and an outlet 142 located on an outer peripheral side of the impeller 10.

As shown in FIGS. 1 and 2, the blades 13 and the channel 14 between the blades 13, 13 are curved in both radial and axial directions of the impeller 10.

When the impeller 10 is rotated in the direction of arrow 10R (FIG. 1) by a drive portion (not shown), the gas in the channel 14 is accelerated by a centrifugal force. Thus, the gas is sucked from the inlet 141 into the channel 14, compressed while being flowing through the channel 14 in a direction of arrow F in FIG. 1, and discharged from the outlet 142.

The impeller 10 is formed by fused deposition modeling using low-alloy steel, stainless steel, or titanium alloy.

The low-alloy steel is, for example, Ni-Cr-Mo steel or Cr-Mo steel. The stainless steel is, for example, precipitation hardening stainless steel, martensitic stainless steel, or two-phase stainless steel.

To reduce friction loss on the wall 15 of the channel 14, a surface 15A of the wall 15 is required to have high smoothness. Thus, the wall 15 of the channel 14 of the formed impeller 10 is polished and finished up with a required value of surface roughness.

As shown in FIGS. 1 and 2, the surface 15A of the wall 15 of the channel 14 is constituted by a surface 11A of the hub 11, an inner surface 12A of the shroud 12, a front side surface 13A of the blade 13, and a back side surface 13B of the blade 13 facing the front side surface 13A. The front side surface 13A of the blade 13 protrudes toward the back side surface 13B of the adjacent blade 13.

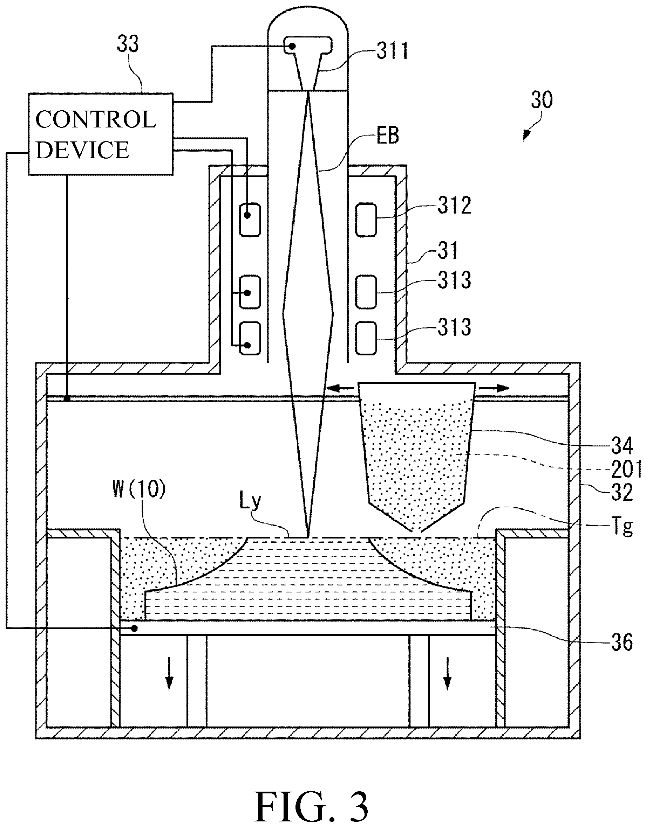

With reference to FIG. 3, a deposition modeling device 30 that can be used to form the impeller 10 will be described.

The deposition modeling device 30 forms the impeller 10 by fused deposition modeling using an electron beam (an electron ray) that is a high-energy heat source.

The deposition modeling device 30 includes an electron beam guide path 31 that guides an electron beam EB toward a target surface Tg, a chamber 32 in which a workpiece W (the impeller 10) is formed through melting and solidification caused by application of the electron beam EB, and a control device 33 that controls components of the deposition modeling device 30 based on three-dimensional data.

Pressure in the electron beam guide path 31 and the chamber 32 is reduced to a predetermined degree of vacuum with respect to atmospheric pressure outside thereof. This can reduce oxidation of a use material.

The electron beam guide path 31 includes an electron beam generation source 311 that emits the electron beam EB, and a focusing coil 312 and deflection coils 313 arranged around the electron beam EB.

A target surface Tg to which the electron beam EB is applied is set in an internal space of the chamber 32. The target surface Tg is a horizontal plane.

The chamber 32 includes therein a hopper 34 that supplies metal powder 201 to the target surface Tg, and a movable table 36 that supports the workpiece W.

In view of residual stress of the workpiece W, a heating device that heats the workpiece W may be provided in the chamber 32 to control a temperature as necessary.

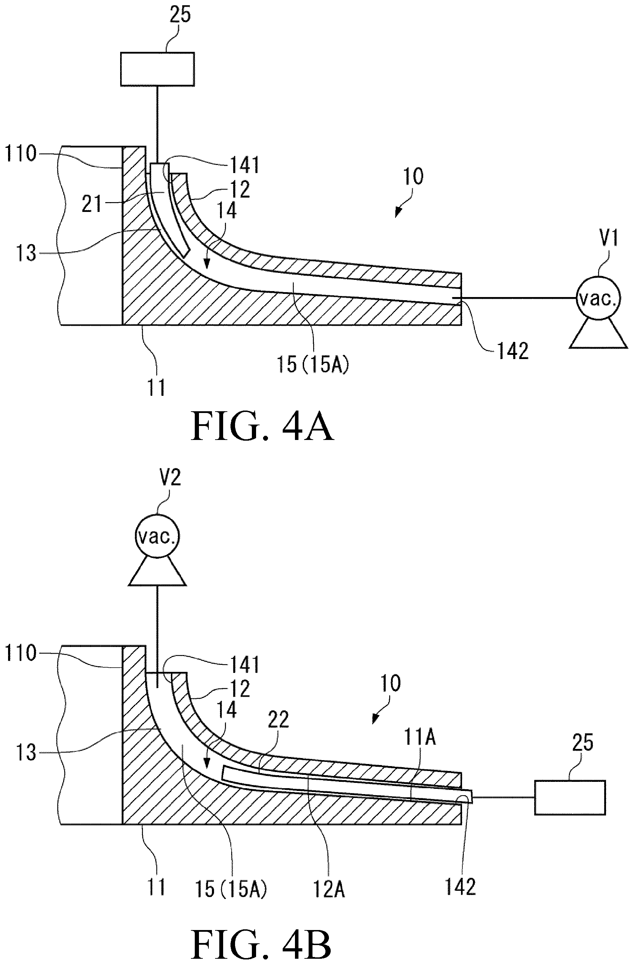

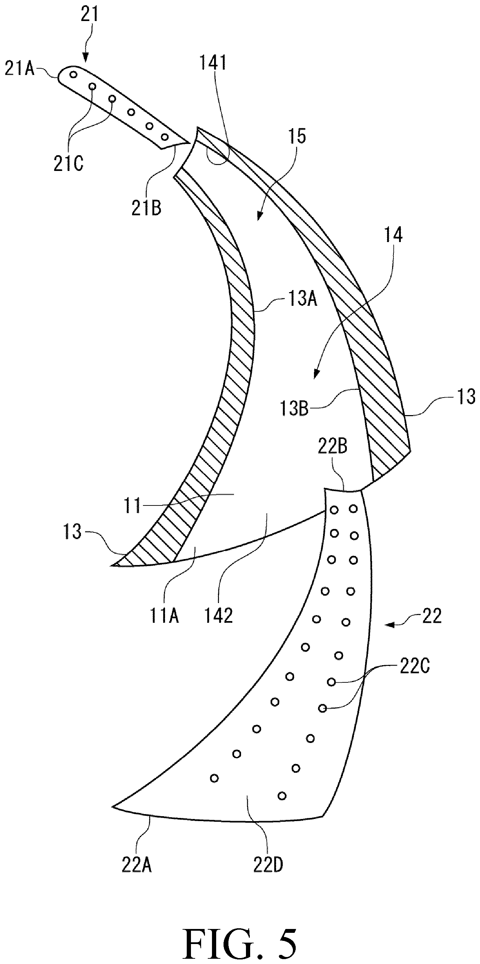

Next, with reference to FIGS. 4 and 5, nozzle members 21, 22 that can be used to polish the wall 15 of the channel 14 will be described.

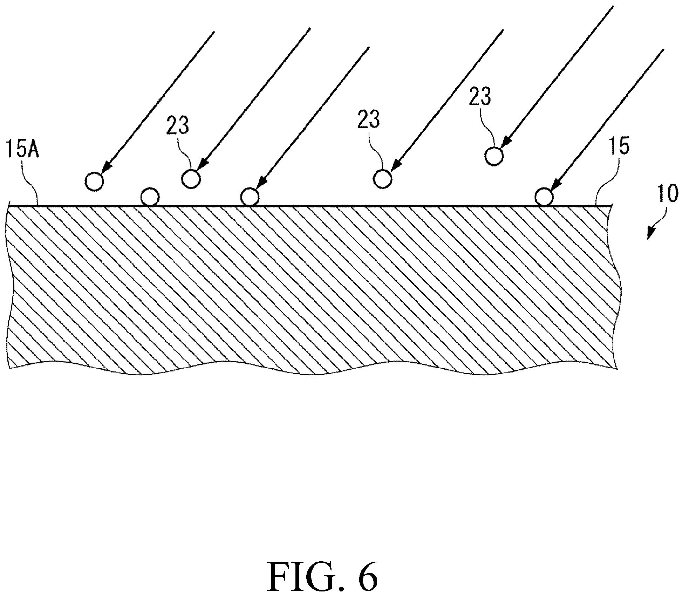

In this embodiment, as shown in FIGS. 4A and 4B, particulate polishing materials 23 (FIG. 6) are sprayed on the surface 15A of the wall 15 of the channel 14 from nozzle holes 21C, 22C (FIG. 5) formed in the first nozzle member 21 and the second nozzle member 22 inserted into the channel 14.

In this embodiment, mechanical dry polishing without any solution is performed. This is environment-compatible because of no problem in discharge of a solution, and also there is no risk that polishing solution causes corrosion of the impeller 10 beyond the aim of polishing. Further, there is neither a risk that a hydrogen gas generated by a chemical reaction between metal and polishing solution adheres to the wall surface of the channel to prevent polishing nor a risk that hydrogen is occluded in by the wall of the channel.

The first nozzle member 21 and the second nozzle member 22 are preferably made of tool steel resistant to wear by the polishing materials 23.

The second nozzle member 22 will be described as an example out of the first nozzle member 21 and the second nozzle member 22.

As shown in FIGS. 4B and 5, the second nozzle member 22 is curved following the shape of the channel 14 on the side of the outlet 142, and includes a base end 22A from which the polishing materials 23 are supplied and a closed front end 22B.

Four side walls of the second nozzle member 22 face the surface 11A of the hub 11, the inner surface 12A (FIG. 4B) of the shroud 12, the front side surface 13A of the blade 13, and the back side surface 13B of the blade 13. FIG. 5 shows a side wall 22D facing the inner surface 12A of the shroud 12.

The four side walls of the second nozzle member 22 each have a plurality of nozzle holes 22C extending through the side wall in a thickness direction. The nozzle holes 22C are preferably located over a large area in each of the side walls.

As shown in FIG. 4B, the base end 22A of the second nozzle member 22 is connected to a shot device 25. The shot device 25 that is a supply source of the polishing materials 23 uses compressed air and supplies the polishing materials 23 on a high-speed flow of air from the base end 22A to an inner side (a hollow portion) of the second nozzle member 22. The polishing materials 23 supplied into the second nozzle member 22 are sprayed from each nozzle hole 22C toward the surface 15A of the wall 15. Then, the polishing materials 23 are recovered, and the collected polishing materials 23 can be supplied again from the shot device 25.

The first nozzle member 21 is configured similarly to the second nozzle member 22.

As shown in FIGS. 4A and 5, the first nozzle member 21 is curved following the shape of the channel 14 on the side of the inlet 141, and includes a base end 21A from which the polishing materials 23 are supplied by the shot device 25 and a closed front end 21B. Four side walls of the first nozzle member 21 each have a plurality of nozzle holes 21C extending through the side wall in a thickness direction.

It is preferable that when the first nozzle member 21 and the second nozzle member 22 are inserted into the channel 14, the first nozzle member 21 and the second nozzle member 22 generally extend from the inlet 141 to the outlet 142 of the channel 14, so that the nozzle holes 21C, 22C are distributed over the almost entire region of the surface 15A of the wall 15.

The polishing material 23 (a projected material) sprayed from the nozzle holes 21C, 22C in the first nozzle member 21 and the second nozzle member 22 toward the wall 15 of the channel 14 may be made of, for example, silicon carbide (SiC) or aluminum oxide (Al₂O₃) .

An average particle size of the polishing material 23 may be set as appropriate in a range of, for example, 50 µm to 100 µm. In FIG. 6, the polishing material 23 is schematically shown as a spherical particle, but often has an irregular shape caused by crush. However, the polishing material 23 may have a regular shape such as a rectangular parallelepiped, a cube, or a flat shape.

The shape, particle size, spray pressure, specific gravity, hardness, or the like of the polishing material 23 may be determined in view of target surface roughness, permitted polishing time, or the like.

Now, a method for producing the impeller 10 will be described.

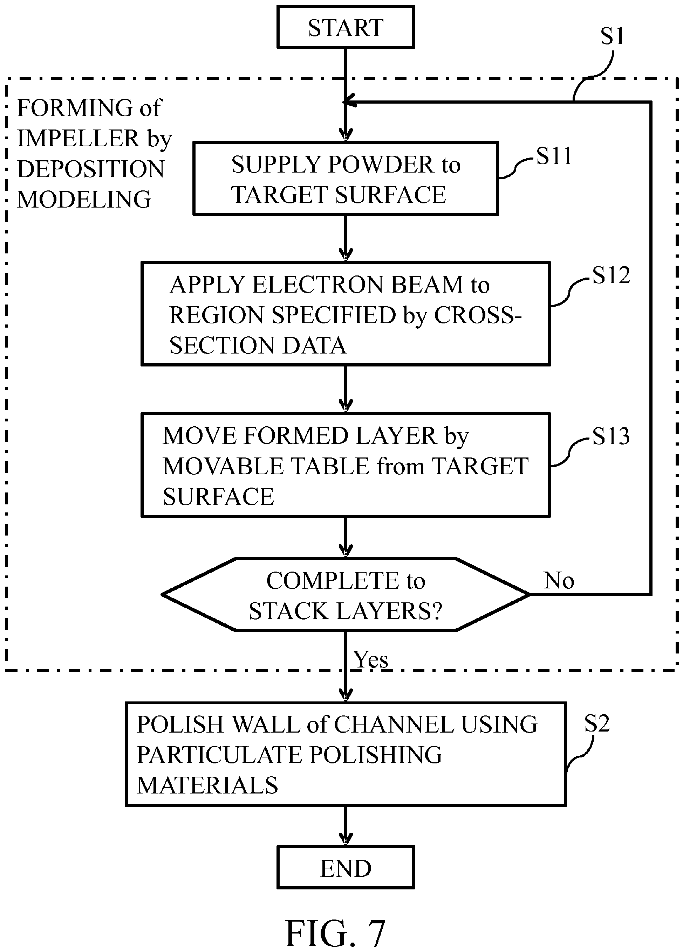

As shown in FIG. 7, the impeller 10 is produced in a forming step S1 by the fused deposition modeling and a polishing step S2 using the polishing materials 23.

First, in the forming step S1, under control by the control device 33 in the deposition modeling device 30 shown in FIG. 3, the metal powder 201 as a material is supplied from the hopper 34 to the target surface Tg (powder supply step S11). The metal powder 201 is spread on the target surface Tg with a predetermined thickness. A rake arm (not shown) movable in parallel with the target surface Tg may be used as necessary.

Then, the electron beam EB is applied only to a specified region in the target surface Tg based on the cross-section data (electron beam application step S12). At this time, the control device 33 electromagnetically controls the focusing coil 312 and the deflection coil 313, and thus the electron beam EB scans the specific region in the target surface Tg at high speed. The metal powder 201 is locally melted in a position where the electron beam EB is applied, and solidified after the electron beam EB passes the position.

Any appropriate heating device or an electron beam EB with a low output may be used to preheat the metal powder 201 before its melting.

After the electron beam EB is applied to the entire specified region in the target surface Tg, through melting and solidification of the metal powder 201, a layer Ly is formed on the target surface Tg.

Then, the movable table 36 is lowered by a thickness of the layer Ly so as to move and retract (offset) the completed layer Ly from the target surface Tg (moving step S13). The target surface Tg is set to a surface of the layer Ly formed immediately therebefore.

The above steps S11 to S13 are repeated until stacking of the layers Ly is completed. The stacked layers Ly are tightly bonded to integrally form the impeller 10.

Each of the plurality of stacked layers Ly has the same thickness as each other. The thickness of each layer Ly may be set as appropriate in a range of, for example, 10 µm to 50 µm.

The metal powder 201 supplied around the workpiece W (the impeller 10) or supplied to positions corresponding to insides of the channel 14 and the shaft hole 110 respectively is not solidified because the electron beam EB is not applied thereto. Such metal powder 201 can be recovered and reused.

The surface roughness Ra of the wall 15 of the channel 14 of the impeller 10 formed by the above is, for example, about 25 µm to 40 µm.

Next, by the polishing step S2, the wall 15 of the channel 14 is polished to reach the surface roughness Ra required for the surface 15A of the wall 15. The required surface roughness Ra is, for example, 0.2 µm.

As shown in FIGS. 4A and 4B, in the polishing step S2, in a state that the first nozzle member 21 and the second nozzle member 22 have been inserted into the channel 14, the polishing materials 23 are sprayed toward the surface 15A of the wall 15 from the nozzle holes 21C, 22C in the first and second nozzle members 21, 22.

As shown in FIG. 4A, the first nozzle member 21 is inserted from the inlet 141 into the channel 14, the shot device 25 is actuated, and thus the polishing materials 23 are sprayed together with compressed air from the respect nozzle holes 21C toward the surface 15A of the wall 15. When the polishing materials 23 collide with the surface 15A of the wall 15 at high speed, the wall 15 is polished, and a surface portion of the wall 15 is subjected to work-hardening and transformation of metal microstructure due to plastic deformation, and further subjected to compression residual stress. The applied residual stress is, for example, 120 MPa to 1000 MPa from data on fine particle peening and ultrasonic cavitation. With respect to the work-hardening of, for example, an aluminum alloy and high-speed tool steel, Vickers hardness is in a range of 40 HV to 700 HV.

The polishing materials 23 sprayed from the respective nozzle holes 21C can be sucked by a suction device V1 from the side of the outlet 142 of the channel 14 and removed from the inside of the channel 14.

Similarly, as shown in FIG. 4B, the second nozzle member 22 is inserted from the outlet 142 into the channel 14, the shot device 25 is actuated, and thus the polishing materials 23 are sprayed from the respective nozzle holes 22C toward the surface 15A of the wall 15.

The polishing materials 23 and shavings can be sucked by a suction device V2 from the side of the inlet 141 of the channel 14 and removed from the inside of the channel 14.

Both the first nozzle member 21 and the second nozzle member 22 may be inserted into the channel 14 for polishing, or either the first nozzle member 21 or the second nozzle member 22 may be inserted into one side of the channel 14 and then replaced by the other nozzle member after polishing of the one side of the wall surface of the channel 14 is finished.

Even if the channel 14 of the impeller 10 has a complicated shape, the first and second nozzle members 21, 22 are inserted into the channel 14, and the polishing materials 23 are sprayed on the surface 15A of the wall 15 from the plurality of nozzle holes 21C, 22C, thereby allowing polishing and smoothing of the entire surface 15A of the wall 15 including an innermost part of the channel 14.

As described above, the surface roughness Ra of the wall 15 formed by the fused deposition modeling is in a range of, for example, 25 µm to 40 µm, and is not worse than surface roughness (for example, about 25 µm) of a wall of a channel of an impeller formed by casting or electrical discharge machining.

Thus, by the polishing step S2, the surface roughness Ra can be easily brought to a value or less required for the wall 15 of the channel 14 of the impeller 10, and only a slight amount of surface is removed by polishing, thereby causing little unevenness in polishing (removal is finished before unevenness in polishing occurs).

Depending on the particle size, spray pressure, or the like of the polishing materials 23 sprayed on the wall 15, the surface roughness of the wall 15 can be brought to a required value simply by performing the polishing step S2 of spraying the polishing materials 23 on the wall 15 through the first nozzle member 21 and the second nozzle member 22, for example, for several seconds to several minutes.

If a wall surface of a channel of an impeller formed by methods other than the fused deposition modeling is polished to reach the required value of the surface roughness, a polishing step takes long time.

Specifically, according to this embodiment, the impeller 10 is formed by the fused deposition modeling, and the particulate polishing materials 23 are sprayed toward the wall 15 of the channel 14 of the impeller 10. Thereby, it is possible to improve efficiency of the entire production including forming of the impeller 10 and polishing to a predetermined surface roughness as compared to a case where a wall surface of a channel of an impeller formed by methods other than the fused deposition modeling is polished.

Further, a product formed by deposition modeling generally has metal microstructure and strength inferior to those of a product obtained by machining such as rolling, casting, or forging. However, according to this embodiment, work-hardening, transformation of metal microstructure, and application of compression residual stress caused by spraying the particulate polishing materials 23 can improve fatigue strength, resistance to wear, and resistance to stress corrosion crack.

Specifically, according to this embodiment including the forming step S1 by the fused deposition modeling and the polishing step S2 using the particulate polishing materials 23, surface roughness that can be achieved in a product formed by the fused deposition modeling can be made use of in the polishing step S2 to improve production efficiency, and mechanical properties of the product formed by the fused deposition modeling can be improved in the polishing step S2 to ensure reliability of the impeller 10.

This can advantageously provide an impeller 10 with high performance and reliability at low cost.

In this embodiment, a laser beam may be used instead of the electron beam EB as the heat source for melting the metal powder 201. In that case, the deposition modeling device 30 may include a laser oscillator instead of the electron beam generation source 311.

### [Variant of first embodiment]

If there is a possibility that unevenness in polishing occurs in the surface 15A of the wall 15 on which the polishing materials 23 have been sprayed because of conditions such as the specific gravity, hardness, particle size, and spray pressure of the polishing materials 23, the material of the impeller 10, and the like, it is advantageous that the first nozzle member 21 and the second nozzle member 22 are moved in the channel 14.

Between the four side walls of the first nozzle member 21 and the surface 15A of the wall 15 facing the side walls, there is a space that allows the first nozzle member 21 to be moved in a flow direction of the channel 14 and a width direction of the channel 14 (a circumferential direction of the impeller 10). The same applies to the second nozzle member 22.

Thus, the polishing materials 23 can be sprayed from the nozzle holes 21C, 22C to polish the wall 15 while the first nozzle member 21 and the second nozzle member 22 are being moved in the channel 14.

The first nozzle member 21 and the second nozzle member 22 may be moved, manually or using a drive device, in the channel 14 in a predetermined direction by a predetermined stroke. The first and second nozzle members 21, 22 are preferably moved at least in the flow direction out of the flow direction and the width direction of the channel 14. During the time from start to end of the polishing step S2, the first and second nozzle members 21, 22 each are preferably reciprocated in the flow direction at least one time.

As the first and second nozzle members 21, 22 are moved, positions of the nozzle holes 21C, 22C are changed, and positions in which the polishing materials 23 sprayed from the nozzle holes 21C, 22C collide with the surface 15A of the wall 15 are also changed. This can reduce unevenness in polishing, and allows polishing to be finished in a shorter time.

Only one of the first and second nozzle members 21, 22 may be moved corresponding to a region of the surface 15A in which there is a possibility that unevenness in polishing occurs.

The number, opening diameters, density, layout, and the like of the nozzle holes 21C, 22C may be determined in view of spray pressure and the like of the polishing materials 23 for each partial portion of the respective first and second nozzle members 21, 22.

If spray pressure at the front ends 21B, 22B farther from the shot device 25 is lower than that at the base ends 21A, 22A closer to the shot device 25 in the first and second nozzle member 21, 22, it is advantageous that the number of the nozzle holes 21C, 22C per unit area, opening diameters, and density of the nozzle holes 21C, 22C provided to the front ends 21B, 22B are increased as compared to those provided to the base ends 21A, 22A.

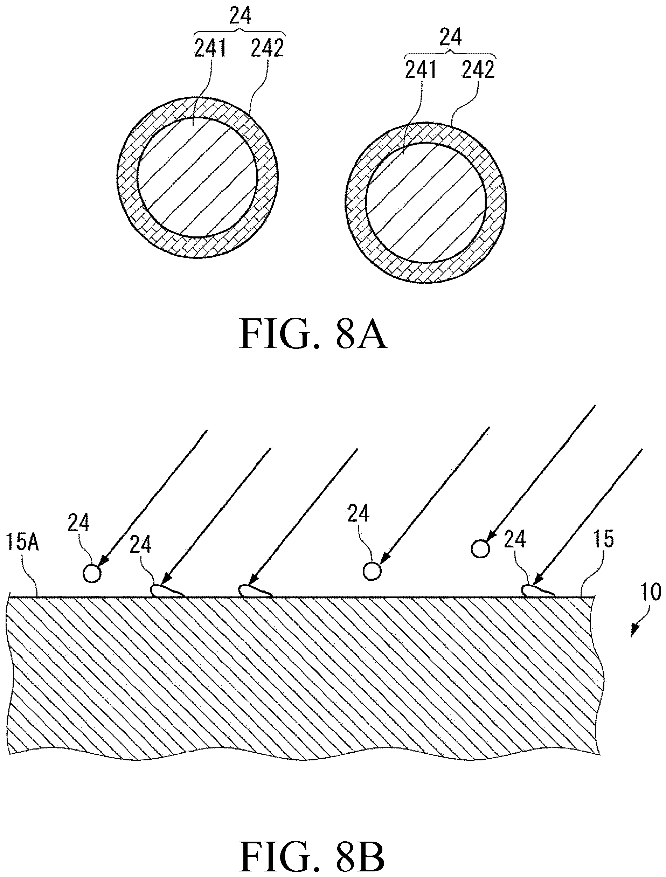

In the polishing step S2 of this embodiment, an elastic polishing material 24 in FIG. 8A may be used. The elastic polishing material 24 includes a particulate core material 241 having elasticity and adhesion and abrasive grains 242 stacked on a surface of the core material 241 in a radial direction of the core material 241 to form a plurality of layers.

The core material 241 can be made of a polymer material having low elastic modulus and adhesion. For example, a polyrotaxane compound is favorable.

In FIG. 8A, the core material 241 is schematically shown as a spherical particle, but often has an irregular shape caused by crush. However, the core material 241 may have a regular shape such as a rectangular parallelepiped, a cube, or a flat shape.

An average particle size of the core material 241 may be set as appropriate in a range of, for example, 0.05 mm to 3.0 mm.

The abrasive grains 242 may be made of, for example, diamond, boron carbide (B₄C), silicon carbide, alumina, tungsten carbide, zirconia, zircon, garnet, quartz, glass, or the like. The abrasive grains 242 made of different materials may be mixed and provided on the surface of the core material 241.

An average particle size of each abrasive grain 242 may be set as appropriate in a range of, for example, 0.1 µm to 12 µm.

An average particle size of the elastic polishing material 24 as a whole including the core material 241 and layers of the abrasive grains 242 may be set as appropriate in a range of, for example, 0.05 mm to 3.0 mm.

After the abrasive grains 242 are adhered to the surface of the core material 241, a pressing force is applied by pushing, hitting, or collision to stabilize the abrasive grains 242 on the surface of the core material 241. The abrasive grains 242 are again adhered to the core material 241 exposed between the abrasive grains 242 by the application of the pressing force, and then the pressing force is applied. By repeating this process, layers of the abrasive grains 242 are stacked on the surface of the core material 241, and finally, the entire surface of the core material 241 is tightly covered with the abrasive grains 242. Specifically, the core material 241 is confined inside the abrasive grains 242. The abrasive grains 242 in each layer is supported on the surface of the core material 241 by adhesion of the core material 241.

The number of layers of the abrasive grains 242 or the thickness of each layer may be determined so that the elastic polishing material 24 keeps elasticity as a whole.

If the shot device 25 is actuated with the first and second nozzle members 21, 22 being inserted into the channel 14, as shown in FIG. 8B, the elastic polishing materials 24 are sprayed together with compressed air from the respective nozzle holes 21C, 22C toward the surface 15A of the wall 15. At this time, each elastic polishing material 24 is easily deformed to be flat by collision with the wall 15, and thus has a large contact area with the wall 15. Also, in that state, the elastic polishing material 24 polishes the wall 15 while sliding along the wall 15.

With the elastic polishing material 24, a load in the collision is widely dispersed by elastic deformation, and a contact region is displaced by sliding. This allows a larger region on the wall surface to be evenly polished, and further, polished more smoothly in a shorter time.

### [Second embodiment]

Next, a production of an impeller 10 according to a second embodiment, which is an embodiment of the present invention, will be described.

The second embodiment is different from the first embodiment in a method of polishing a wall 15 of a channel 14 of an impeller 10 formed by fused deposition modeling, and the same as the first embodiment in other matters.

In the second embodiment, as shown in FIG. 9, a polishing material pool 40 that stores polishing materials 41 and a drive device 45 are used to polish the wall 15 of the channel 14 of the impeller 10.

The polishing material pool 40 includes the particulate polishing materials 41, and a container 42 that can house the polishing materials 41 and the impeller 10.

The polishing materials 41 may be the same as the polishing materials 23 described in the first embodiment. It is enough that the polishing materials 41 fills, for example, half of the volume of the container 42. An appropriate amount of the polishing materials 41 in the container 42 may be determined so as to be enough to sufficiently polish the wall 15 of the channel 14 and not to be excessive for resistance of the impeller 10 in the polishing material pool 40.

The impeller 10 is disposed in the container 42 so that an axis thereof extends along a horizontal direction. As described later, the axis of the impeller 10 may be inclined to the horizontal direction as long as the polishing materials 41 scooped up by blades 13 can flow down due to self-weight.

The drive device 45 supports the impeller 10 disposed in the container 42 with a jig (not shown) and a shaft 451, and rotates the impeller 10 around the axis. A rotating direction at this time is opposite to a rotating direction of the impeller 10 being used after incorporated into a centrifugal rotating machine (see arrow R in FIG. 9).

The drive device 45 rotates the impeller 10 at a sufficiently lower speed than a rotation speed of the impeller 10 being used after incorporated into the centrifugal rotating machine and used.

After the impeller 10 is formed by fused deposition modeling, a polishing step is performed using the polishing material pool 40 and the drive device 45.

In the polishing step, the impeller 10 is housed together with the polishing materials 41 in the container 42 of the polishing material pool 40. Then, the drive device 45 rotates the impeller 10 around the axis in the direction of arrow R.

As the impeller 10 is rotated in the container 42, the polishing materials 41 gradually enter the channel 14 from an outlet 142 to fill the channel 14. Then, while being scooped up by back side surfaces 13B of the blades 13, the polishing materials 41 are forced to flow toward an inlet 141 due to self-weight (see arrow A in FIG. 9), and discharged from the inlet 141 into the polishing material pool 40. While this process is repeated, the polishing materials 41 in the container 42 are circulated between the inside and outside of the channel 14.

As described above, while the polishing materials 41 are forced to flow through the channel 14 toward the inlet 141, the polishing materials 41 rub and polish the wall 15 of the channel 14.

Even if the channel 14 has a complicated shape, an aggregate of the polishing materials 41 rub the wall 15 of the channel 14, thereby allowing polishing and smoothing of the entire surface of the wall 15.

Also by the polishing method of the second embodiment, the surface roughness of the wall 15 formed by the fused deposition modeling can be easily brought to the required value or less. Further, only a slight amount of surface is removed by polishing, thereby causing little unevenness in polishing

In the first and second embodiments, after the impeller 10 is formed by fused deposition modeling, an erosion-resistant coating may be applied to the surface of the wall 15 of the channel 14. Such a coating may be formed by chemical or physical vapor deposition, using, for example, WC-based composite (cermet) mainly containing tungsten carbide (WC), Cr₃C₂-based composite, alumina-titania (AlO₃-TiO₂), chromic oxide ceramics (Cr₂O₃), or the like. Such a coating can prevent wear, thickness reduction, or corrosion (particle erosion) of the wall surface of the channel caused by collision of waterdrops, dust, foreign matters, and the like included in a fluid.

As described above, since the surface roughness of the wall 15 of the channel 14 of the impeller 10 at the moment after fused deposition modeling is in a range of, for example, about 25 µm to 40 µm, minute irregularities on the surface of the base material of the impeller 10 and the erosion-resistant coating are firmly joined by an anchor effect.

Since the surface roughness of the base material of the impeller 10 at the moment after the fused deposition modeling is in a range of, for example, about 25 µm to 40 µm, surface roughness of the erosion-resistant coating that covers the surface of the base material is low, and the range is, for example, about 10 nm to 800 nm. Thus, the surface roughness of the coating can be easily brought to the surface roughness required for the wall 15 of the channel 14. Specifically, between the forming step by the fused deposition modeling described above and the polishing step by the method described in the first or second embodiment, a step of applying the erosion-resistant coating may be provided.

Other than the above, the configuration in the second embodiment may be modified within the scope of the invention, which is solely defined by the appended claims.

### Reference Signs List

- 10: impeller
- 10A: rotating shaft
- 10R: arrow
- 11: hub
- 11A: surface
- 12: shroud
- 12A: inner surface
- 13: blade
- 13A: front side surface
- 13B: back side surface
- 14: channel(s)
- 15: wall
- 15A: surface
- 21: first nozzle member
- 21A: base end
- 21B: front end
- 21C: nozzle hole(s)
- 22: second nozzle member
- 22A: base end
- 22B: front end
- 22C: nozzle hole(s)
- 22D: side wall
- 23: polishing material(s)
- 24: elastic polishing material(s)
- 25: shot device (supply source)
- 30: deposition modeling device
- 31: electron beam guide path
- 32: chamber
- 33: control device
- 34: hopper
- 36: movable table
- 40: polishing material pool
- 41: polishing material(s)
- 42: container
- 45: drive device
- 110: shaft hole
- 141: inlet
- 142: outlet
- 201: metal powder
- 241: core material
- 242: abrasive grain(s)
- 311: electron beam generation source
- 312: focusing coil
- 313: deflection coil(s)
- A: arrow
- EB: electron beam F arrow
- Ly: layer(s)
- R: arrow
- S1: forming step
- S11: powder supply step
- S12: electron beam application step
- S13: moving step
- S2: polishing step
- Tg: target surface
- V1: suction device
- V2: suction device
- W: workpiece

## Claims

1. A method for producing a **centrifugal-type** impeller (10), comprising:
a forming step of forming the **centrifugal-type** impeller (10) by fused deposition modeling; and
a polishing step of polishing a wall (15) that defines a channel (14) of the **centrifugal-type** impeller (10) using particulate polishing materials (23),
wherein the wall (15) of the channel (14) is rubbed with the particulate polishing materials (23)in the polishing step,
**characterized in that**, in the polishing step, by disposing the **centrifugal-type** impeller (10) in a polishing material pool (40) that pools the particulate polishing materials (23) so that a part of the **centrifugal-type** impeller (10) emerges out of the polishing material (23) and rotating the **centrifugal-type** impeller (10) disposed in the polishing material pool (40) in an opposite direction of a rotating direction in use, the particulate polishing materials (23) having entered the channel (14) from an outlet (142) of the channel (14) rubs the wall (15) while being forced to flow toward an inlet (141) of the channel (14) due to self-weight.

2. The method according to claim 1, wherein the wall of the channel (14) is polished to reach surface roughness Ra of 0.2 µm or less in the polishing step.

3. The method according to claim 1 or 2, wherein surface roughness Ra of a not yet polished wall (15) of the **centrifugal-type** impeller (10) formed in the forming step is in a range of 25 µm to 40 µm.

4. The method according to any one of claims 1 to 3, wherein the **centrifugal-type** impeller (10) is formed by successively stacking layers in the forming step, each of the layers being formed through melting and solidification of a use material (201) and having a thickness of 100 µm to 1000 µm.

## Patentansprüche

1. Verfahren zur Herstellung eines Zentrifugal-Laufrads (10), umfassend:
eine Formgebungsschritt zum Formen des Zentrifugal-Laufrads (10) durch Modellieren über Schmelzablagerung; und
einen Polierschritt zum Polieren einer Wand (15), die einen Kanal (14) des Zentrifugal-Laufrads (10) definiert, unter Verwendung partikelförmigen Poliermittels (23), wobei die Wand (15) des Kanals (14) in dem Polierschritt mit dem partikelförmigen Poliermittel (23) gerieben wird,
**dadurch gekennzeichnet, dass** in dem Polierschritt, durch Anordnen des Zentrifugal-Laufrads (10) in einem Becken (40) für Poliermittel, welches das partikelförmige Poliermittel (23) derart aufnimmt, dass ein Teil des Zentrifugal-Laufrads (10) aus dem Poliermittel (23) heraus steht und durch Drehen des in dem Becken (40) für Poliermittel angeordneten Zentrifugal-Laufrads (10) in eine entgegengesetzte Richtung zu einer Drehrichtung im Gebrauch, das in den Kanal (14) von einem Auslass (142) des Kanals (14) eingetretene partikelförmige Poliermittel (23) die Wand (15) reibt, während es dazu gezwungen wird, in Richtung eines Einlasses (141 des Kanals (14) aufgrund des Eigengewichts zu strömen.

2. Verfahren nach Anspruch 1, wobei die Wand des Kanals (14) derart poliert wird, dass sie im Polierschritt eine Oberflächen-Rauigkeit Ra von 0,2 µm oder weniger erreicht.

3. Verfahren nach Anspruch 1 oder 2, wobei die Oberflächen-Rauigkeit Ra einer in dem Formgebungsschritt zu formenden und noch nicht polierten Wand (15) des Zentrifugal-Laufrads (10) im Bereich von 25 µm bis 40 µm liegt.

4. Verfahren nach einem der Ansprüche 1 bis 3, wobei das Zentrifugal-Laufrad (10) ausgebildet wird durch aufeinander folgendes Stapeln von Lagen im Formgebungsschritt, wobei jede der Lagen gebildet wird durch Schmelzen und Erstarren lassen eine Gebrauchsmaterials (201) und eine Dicke von 10 µm bis 1000 µm hat.

## Revendications

1. Procédé pour produire un rouet de type centrifuge (10), comprenant :
une étape de formation comprenant la formation du rouet de type centrifuge (10) par dépôt de fil en fusion ; et
une étape de polissage comprenant le polissage d'une paroi (15) qui définit un canal (14) du rouet de type centrifuge (10) en utilisant des matériaux de polissage particulaires (23),
dans lequel la paroi (15) du canal (14) est frottée avec les matériaux de polissage particulaires (23) dans l'étape de polissage,
**caractérisé en ce que**, dans l'étape de polissage, en disposant le rouet de type centrifuge (10) dans une accumulation de matériaux de polissage (40) qui accumule les matériaux de polissage particulaires (23) pour qu'une partie du rouet de type centrifuge (10) sorte du matériau de polissage (23) et en mettant en rotation le rouet de type centrifuge (10) disposé dans l'accumulation de matériaux de polissage (40) dans une direction opposée d'une direction de rotation durant l'utilisation, les matériaux de polissage particulaires (23) entrés dans le canal (14) à partir d'une sortie (142) du canal (14) frottent la paroi (15) tout en étant forcés de s'écouler vers une entrée (141) du canal (14) en raison de leur poids propre.

2. Procédé selon la revendication 1, dans lequel la paroi du canal (14) est polie pour atteindre une rugosité de surface Ra de 0,2 µm ou moins dans l'étape de polissage.

3. Procédé selon la revendication 1 ou 2, dans lequel une rugosité de surface Ra d'une paroi non encore polie (15) du rouet de type centrifuge (10) formé dans l'étape de formation est dans une plage de 25 µm à 40 µm.

4. Procédé selon l'une quelconque des revendications 1 à 3, dans lequel le rouet de type centrifuge (10) est formé en empilant successivement des couches dans l'étape de formation, chacune des couches étant formée par fusion et solidification d'un matériau d'utilisation (201) et ayant une épaisseur de 100 µm à 1000 µm.
